# EUROPEAN PATENT APPLICATION

(11) **EP 4 678 297 A1**
(43) Date of publication of application: **14.01.2026**
(21) Application number: 24187995.6
(22) Date of filing: 11.07.2024
(51) Int. Cl.: B05B 11/00

(54) **VALVE DEVICE FOR DISPENSER ARRANGEMENT**

(71) Applicant: ALPLA Werke Alwin Lehner GmbH & Co KG, 6971 Hard (AT)
(72) Inventor: BROUWER, Mark, 5384MS Heesch (NL); SHARMA, Sunil Kumar, 110092 Delhi (IN)
(74) Representative: Kiwit, Benedikt

(57) **Abstract**

The invention relates to a valve device (1) for a dispenser arrangement (100). The valve device (1) comprises a valve body (2) defining a first inlet (3a), a second inlet (3b), a valve space (4) arranged, along a longitudinal axis (X), between the first inlet (3a) and the second inlet (3b), an outlet (5) being fluidly connected to the valve space (4) to allow a fluid to flow through the valve body (2) along a respective flow path (Pa, Pb) from either of the inlets (3a, 3b) through the valve space (4) and out of the outlet (5), wherein each of the first inlet (3a) and the second inlet (3b) is fluidly connected, along the respective flow path (Pa, Pb), to the valve space (4) via a respective inlet space (6a, 6b) defined by the valve body (2) and arranged along the axis (X), and wherein each of the inlet spaces (6a, 6b) is fluidly connected, along the respective flow path (Pa, Pb), to the valve space (4) by a channel section (7a, 7b) defined by the valve body (2) and arranged along the axis (X). The valve device (1) further comprises, per flow path (Pa, Pb), a valve element (8a, 8b) being at least partially housed in the respective inlet space (6a, 6b). Each of the valve elements (8a, 8b) is arranged so as to be, with respect to the axis (X), axially displaceable in the related inlet space (6a, 6b) between (a) a flow position, in which the respective valve element (8a, 8b) is axially displaced towards the related inlet (3a, 3b) to define a flow passage (Pa1, Pb1) of the respective flow path (Pa, Pb) between the respective valve element (8a, 8b) and a passage section (30a, 30b) of the related inlet (3a, 3b), and (b) a closing position, in which the respective valve element (8a, 8b) is axially displaced towards the valve space (4) to close the related channel section (7a, 7b) and thus to block the related flow path (Pa, Pb). Each of the valve elements (8a, 8b) is configured such that, at least in an orientation of the valve device (1) with the axis (X) being oriented substantially vertically, at least upon fluid flow through the valve device (1), the one of the valve elements (8a, 8b) which is arranged lower compared to the other one of the valve elements (8b, 8a) is positioned in the flow position to allow fluid flow along the related flow path (Pa, Pb), and the other one of the valve elements (8b, 8a) is positioned in the closing position to block fluid flow along the related other flow path (Pb, Pa).

## Description

### 1. Field of the Invention

The present invention relates to a valve device for a dispenser arrangement, a dispenser arrangement for delivering a liquid having the valve device and a pump device, a dispenser unit having the dispenser arrangement and a container, and a method for delivering a liquid with the dispenser unit.

### 2. Technical Background

Dispenser units of various types are well known in the art. Such dispenser units usually comprise a dispenser arrangement for delivering and dispensing a liquid from a container to which the dispenser arrangement is connected. The dispenser arrangement comprises a pump device for pumping the liquid out of a container body of the container and usually to a dispenser of the pump device for dispensing, e.g. by spray dispensing, the liquid. Such dispenser units can be used in various applications, such as for dispensing a cleaning liquid or a lubricant or even for administering a liquid drug, and the like.

Usually, known dispenser units are only operable in an upright orientation. This comes about since the dispenser units often comprise a vent being open to an outside to avoid a vacuum being created in the container, through which vent liquid may leak if the dispenser unit is operated in a downturned orientation. There also exist systems which use a valve including a blocking element which functions by gravity. The valve element is usually made of a metal, like a metal ball, and in case of the dispenser unit being in a downturned orientation, the valve element - by gravity - closes towards an opening of the vent. However, as most of these dispenser units work with a dip tube, said dip tube, in case of the dispenser unit being operated in a downturned orientation, is raised above the liquid level of the downturned container, so that the dispenser unit only works as long as the dip tube is emptied from the liquid remaining therein before being turned upside-down. Once the dip tube is emptied, the dispenser unit only dispenses air caught in the container.

There also exist systems which, in the dispenser unit being operated in the downturned orientation, bypass the dip tube when the valve element blocks the vent, which valve element then liberates a corresponding bypass passage. These systems are usually quite complex as they must be integrated into the pump device.

Also, any known dispenser units are not easily recyclable. This particularly comes about because several components (including the valve element) require a certain material, e.g. metal, in order to function properly, whereas other components (e.g. container body, cap, etc.) are not restricted to a certain material and thus are, for economic reasons (costs, weight, energy, etc.) made of a different material, e.g. plastic. Thus, a material mix, e.g. a mix of metal and a plastic material, is present in known dispensers, which renders such dispensers not easily recyclable.

Therefore, it is an object of the present invention to overcome one or more of the aforementioned drawbacks, in particular to easily provide a dispenser with a valve function to allow a downturned operation, and preferably also to increase recyclability while being producible in a cost-efficient manner.

These and other objects, which become apparent upon reading the following description, are solved by the subject-matter of the independent claims. The dependent claims refer to preferred embodiments of the invention.

### 3. Summary of the Invention

According to a first aspect of the invention, a valve device for a dispenser arrangement for delivering a liquid is provided. The valve device comprises a valve body. The valve body defines a first inlet and a second inlet. The valve body further defines a valve space arranged, along a longitudinal axis (in the following also referred to as the "axis"), between the first inlet and the second inlet. The valve body further defines an outlet being fluidly connected to the valve space to allow a fluid to flow through the valve body along a respective flow path from either of the inlets through the valve space and out of the outlet. Each of the first inlet and the second inlet is fluidly connected, along the respective flow path, to the valve space via a respective inlet space defined by the valve body and arranged along the axis, respectively. Each of the inlet spaces is fluidly connected, along the respective flow path, to the valve space by a channel section defined by the valve body and arranged along the axis, respectively. The valve device further comprises, per flow path, a valve element being at least partially housed in the respective inlet space. Each of the valve elements is arranged so as to be, with respect to the axis, axially displaceable in the related inlet space between (a) a flow position, in which the respective valve element is axially displaced towards the related inlet to define a flow passage of the respective flow path between the respective valve element and a passage section of the related inlet, and (b) a closing position, in which the respective valve element is axially displaced towards the valve space to close the related channel section and thus to block the related flow path. Each of the valve elements is configured such that, at least in an orientation of the valve device with the axis being oriented substantially vertically (or at least in any orientation of the valve device, preferably in any orientation of the valve device in which the axis is not oriented horizontally), and at least upon fluid flow through the valve device, the one of the valve elements which is arranged lower compared to the other one of the valve elements is positioned in the flow position to allow fluid flow along the related flow path, and the other one of the valve elements is positioned in the closing position to block fluid flow along the related other flow path.

The respective flow path sections of the valve device are all arranged along the longitudinal axis. This allows for the valve device to have a longitudinal shape so that, in a radial direction, it can be provided in a quite compact manner, thus facilitating the assembly of the valve device. As the first and second inlets are provided at opposite axial sides, one of the inlets can be arranged downwards towards or into a container, while the other of the inlets can then be arranged upwards and thus close to a ground in case of being used in an inverted orientation. As the valve device provides the two inlets and the outlet, it can be easily used for retrofitting purposes, e.g. for known dispenser systems, by simply plugging a dispenser to the outlet. Hence, any peripheral features, like a pump device, can be individually designed. As the valve elements are configured such that always the lower one releases the respective flow path while the upper one blocks the other flow path, the inlet at the lower side and thus closer to the ground of the liquid volume dependent on the orientation of the system would be in use, and thus allows for an easy and sufficient discharge of the liquid to be dispensed. Also, because only one of the inlets (namely the one being positioned lower compared to the other one) clears the respective flow path via which the liquid is delivered, and the other one of the inlets is correspondingly blocked, suction of air of the respective upper inlet - which is usually not drown in liquid to be dispensed - can be securely avoided.

Within the present description, terms like "axially" and "radially" are related to the longitudinal axis of the valve device. Terms like "downstream" and "upstream" are related to the respective flow path and the functional flowing direction during operation.

Each of the channel sections may be defined by a valve section of the valve body, which respective valve sections each preferably have a reduced cross-section or diameter compared to a cross-section or diameter of the related inlet space when seen along the axis, respectively. This design allows for a defined flow path from the respective inlet space to the valve space. The valve section allows for a defined and effective interplay with the respective valve element to block the related flow path in the closing position. Also, such a structural section can be easily integrated in the valve body, which can thus be easily and cost-efficiently produced.

Each of the valve elements and the related valve sections may together define, in the respective closing position, a circumferential contact area to close the related flow path. Hence, a highly effective blocking of the flow path in the respective closing position can be obtained. Also, such a circumferential contact area can be easily provided. The circumferential contact area can, preferably, have a circular shape or extension.

The two valve elements may be part of a monolithic valve part such that an axial movement of the valve part results in a mutual movement of the valve elements along the axis in that, if the one valve element is in the flow position, the other valve element is in the closing position, and the other way around. In other words, the two valve elements are integrally formed to be part of a monolithic element, namely the valve part, and can thus be moved together. Hence, obtaining the respective flow and closing positions for the corresponding valve elements can be effectively ensured. Also, as the valve elements are provided as a unit element, they allow for a potentially higher weight of the valve elements - namely in the form of the valve part - thus allowing for a more secure displacement of the respective valve elements downwards in a vertical orientation of the axis.

The valve part may comprise a rod section integrally connecting the two valve elements. Hence, the valve part can have a simple structure and thus be easily and cost efficiently produced.

The rod section may extend between the valve elements, preferably along the axis. Hence, a stable valve element can be provided. If extending along the axis, the rod section can effectively take up any forces acting along the axis, i.e. along the corresponding flow path at the valve elements.

The rod section may extend through the valve space. Hence, the valve device can be provided in a compact manner. Also, the rod section may be used to streamline the flow through the valve element, thus reducing any vortices, which may allow for an effective operation of the valve device and delivery of the liquid.

The valve part may have the shape of a dumbbell. Hence, the valve part may have a simple but effective shape, which can be easily and cost efficiently produced.

The valve part having the dumbbell shape may preferably have the rod section at a centre, and at either axial side of the rod section it may have one of the valve elements as a widened section, widened in a direction orthogonal to the axis, compared to the rod section, respectively. Hence, the valve part can be provided in a compact but effective manner.

At least one or each of the valve elements may have a rotationally symmetric shape with respect to the axis. Hence, the valve elements can be easily provided and produced. Also, the valve elements can be easily and effectively used to create the flow passage in the flow position and block the related flow path in the closing position.

At least one or each of the valve elements may at least partially - or as such - have a cylindrical shape extending along the axis. Hence, the valve element can have a very simple and easy-to-produce shape. The cylindrical shape can preferably be a circular cylindrical shape, which allows for an effective function of the valve element and an easy production thereof.

At least one or each of the valve elements may have a flow path section facing towards the related inlet and tapering towards the related inlet. The tapered shape of the valve element allows for an easy displacement of the respective valve element into the flow position; preferably functioning as a guidance. Also, the tapered shape may give the valve element a kind of centring function so that the valve element is easily and effectively positioned in the flow position.

Preferably, the respective flow path section may have a conical shape. Such a shape is easy to produce and effectively achieves the advantages just described for the tapered valve elements.

Preferably, each of the passage sections may have a shape, which corresponds to the shape of the related flow path section to define, in the flow position, the respective flow passage therebetween. By this configuration, an accurately defined flow passage can be provided. This flow passage, as being tilted and due to the corresponding shapes being clearly directed, reduces the forces immediately acting upon the related valve element, so that the valve element securely remains in the flow position.

At least one or each of the valve elements may have a blocking section facing towards the valve space (or the related channel section) and tapering towards the valve space. By the tapered shape of the blocking section, displacement of the respective valve element towards and into the closing position can be facilitated; as preferably acting as a guidance. Also, the tapered shape may have a kind of centering function to allow for an easy and effective displacement of the valve element (in)to the closing position, and thus for a correct (closing) seat at the closing position.

The respective blocking section may preferably have a conical shape. The valve element can thus be easily produced, while the shape, e.g. for creating the blocking of the related flow path against the related channel section, allows for an effective closing / blocking / sealing of the flow path in the closing position.

The valve device may further comprise, per inlet, a spacer section to restrict the axial displacement of the related valve element towards the related inlet in the respective flow position. By the provision of such a spacer section, the flow position can be set in a highly effective manner. This allows for a highly accurate flow passage so that a corresponding flow through the flow passage can be accurately pre-defined.

The spacer section may comprise a protrusion section of the valve body and/or of the related valve element arranged such that it extends across the respective flow passage in the flow position to support the related valve element against the valve body. Hence, the spacer section can be easily provided without the use of any additional parts. For instance, the spacer may comprise one or a plurality of ribs, which are preferably (e.g. evenly) distributed about the axis.

A flow cross-section of each of the flow passages, e.g. (measured) in a plane perpendicular to a flowing direction along the respective flow path at the related flow passage and/or to the axis, may be less than a flow cross-section of an inlet section of the related inlet upstream of the related flow passage, e.g. (measured) in a plane perpendicular to a flowing direction along the respective flow path at the related inlet section and/or to the axis. Alternatively or additionally, a/the flow cross-section of each of the flow passages, e.g. (measured) in a plane perpendicular to the flowing direction along the respective flow path at the related flow passage and/or to the axis, may be less than a flow cross-section of an outlet section of the related inlet space downstream of the related flow passage, e.g. (measured) in a plane perpendicular to a flowing direction along the respective flow path at the related outlet section and/or to the axis. Hence, the flow of liquid along the flow path in the respective flow passage has a higher speed compared to the liquid upstream and/or - preferably at least - downstream of the respective flow passage, namely at a corresponding inlet section or close(er) to the related channel section. This differential in speed results in a pressure differential according to Bernoulli's principle, with a lower pressure in the flow passage compared to the neighboring sections upstream and/or - preferably at least - downstream of the respective flow path around the related valve element, which results in the valve element be forced / sucked towards and thus kept in the respective flow position. Hence, the system itself keeps the valve element in the defined flow position upon liquid flow. Moreover, in case the valve elements are connected or integrally formed, e.g. as the monolithic valve part, the corresponding (suction) force acting upon the valve element on the lower side, i.e. to be positioned in the flow position, also results in the other of the valve elements be forced towards the closing position, so that the whole system can be kept effectively and securely in the respective positions.

Within the present description, the term "flow cross-section" defines the section at the respective portion or position of the related flow path normal to the mean direction of the liquid flow (i.e. flowing direction) through the respective flow path at that portion/position, and bounded by the circumferential outer border defining the wetted perimeter of the liquid flow or stream.

At least one of the first inlet and the second inlet may comprise a tube connection section, respectively, for connecting a suction tube, preferably a dip tube. Hence, a corresponding tube can be attached to the valve device to extend the flow path so that liquid even from a bottom of a container, to which the valve device may be attached, can be reached and thus effectively dispensed. In case of both first and second inlets having such a tube connection section, it is possible to use the valve device in either direction/orientation with respect to the axis, and attach a corresponding suction tube preferably at the lower inlet or the inlet facing downwards or towards the container (body). It is also possible that a suction tube is attached to the upper inlet or even to both inlets, respectively, so that in either orientation of the valve device with respect to the axis, an effective dispensing of the liquid can be obtained, as there is always a suction tube reaching to the corresponding bottom or ground irrespective of the orientation being upright or inverted.

The valve device may further comprise the suction tube, preferably the dip tube, connected to the tube connection section so as to protrude from the valve body. There may be provided one suction tube at one of the inlets or two suction tubes at either of the inlets, respectively. Hence, the related flow path can accordingly be extended, as desired, beyond (i.e. upstream of) the respective inlets of the valve device.

The outlet may comprise a pump connection section for connecting a pump device, preferably through a delivery tube, so as to fluidly connect the outlet with the pump device. Hence, the valve device can be easily connected to a corresponding pump device with common means, like tubes or the like. The valve device can thus be provided as a retrofitting element to common systems, if required, as being easily integrated.

The valve device may further comprise the delivery tube being connected to the pump connection section so as to protrude from the valve body. Hence, the valve device can already be provided with a corresponding connection means, namely the delivery tube, for easily integrating the valve device into a corresponding dispenser arrangement. The delivery tube may thus also easily and effectively extend the flow path downstream of the outlet, as desired.

The valve body may be made of a plurality of body parts being connected to define at least part of the respective flow paths (i.e. to define at least part of the first inlet and/or the second inlet and/or the valve space and/or the outlet and/or the inlet spaces and/or the channel sections). Hence, the valve device can be easily produced, e.g. by injection moulding, irrespective of the complexity of the sections defining the flow path(s).

At least two of the body parts can be connected along a connection area extending in a plane being oriented parallel to the axis to define at least part of the (respective) flow paths. Hence, the corresponding body parts can be provided, e.g., as shells or halve bodies, which can be easily produced and easily connected. This allows for the valve body being provided with minimum parts while still being easily and cost efficiently producible.

At least two of the body parts may be or may comprise pipe segments arranged consecutively along the axis and connected to define at least part of the (respctive) flow paths. Hence, the corresponding sections can be separately produced and designed and connected, as desired. This allows for a comparably good seal of the respective parts and thus of the respective sections of the respective flow path(s).

The valve body and/or the valve elements is/are made of a plastic material, preferably polypropylene (PP). Hence, it is possible to produce a corresponding part of the valve device in a cost-efficient manner. Also, such materials can be easily shaped, e.g. by injection moulding, to provide the corresponding flow path sections and the like.

The valve body and the valve elements (preferably also the monolithic valve part) are preferably made of materials being recyclable in the same recycling stream, preferably they are made of the same material (e.g. polypropylene). Hence, the whole valve device can be easily recyclable, particularly compared to known devices which use elements made from different materials, like metal and plastic, which cannot be recycled together.

According to a second aspect of the invention, a dispenser arrangement for delivering a liquid is provided. The dispenser arrangement comprises a valve device according to the invention and as described exemplarily herein above. Moreover, the dispenser arrangement comprises a pump device, which is fluidly connected or connectable to the outlet, preferably to the pump connection section and more preferred through the delivery tube. The pump device may be configured to be manipulated so as to apply a suction force at the outlet to deliver a liquid through the valve device to a dispenser of the pump device for dispensing the liquid. Hence, the advantages of the valve device, as described herein above, can be applied to a dispenser system, accordingly. Hence, a dispenser arrangement can be provided which can be used - e.g. as a unit - to be assembled in a corresponding dispenser unit.

The pump device may comprise a connection section for connecting the dispenser arrangement to a container carrying a liquid to be delivered by the dispenser arrangement. Hence, the dispenser arrangement can be easily attached to a corresponding container to thus securely fix the dispenser arrangement during operation.

Preferably, the axis is oriented along a connection direction of the connection section for connecting the dispenser arrangement to the container, and preferably, when seen along the axis, the valve device is arranged completely within the outer contour of a connection structure (e.g. a screw structure or the like) of the connection section. Hence, the dispenser arrangement can be easily attached to a container as the valve device is positioned and dimensioned so as to be easily and automatically inserted into a container - at least partially and preferably already in the desired orientation - upon connection of the dispenser arrangement to a container by the connection section.

In a preferred embodiment, the valve device and the pump device can be made of a plastic material, preferably polypropylene. Particularly, the valve device (e.g. including the valve body and the valve elements) and the pump device can be made of materials being recyclable in the same recycling stream, preferably they are made of the same material.

According to a third aspect of the invention, a dispenser unit is provided. The dispenser unit comprises the dispenser arrangement according to the invention, as exemplarily described herein above. The dispenser unit further comprises a container. The container comprises a container body defining a volume for carrying a liquid to be delivered. The volume can be any volume as desired, e.g. ranging from a few millilitres to many litres and beyond. The container further comprises an opening for inserting at least part of the valve device so as to allow delivery of the liquid from the container body to the dispenser by manipulation of the pump device. Preferably, the valve device may be equipped with the dip tube reaching into the volume of the container body, preferably to the ground of the container body, to allow for an effective suction of the liquid in the upright orientation. The container optionally comprises an attachment section for attaching the dispenser arrangement - preferably through the connection section - to the container body preferably such that the opening is closed. The axis may be oriented substantially vertically when the dispenser arrangement is attached to the container, more preferred to the attachment section.

In general, the axis preferably is oriented substantially vertically when the dispenser arrangement is at least partially inserted into the container body through the opening, so that the valve device is in a functional orientation in the upright or inverted orientation of the container or dispenser unit. Alternatively, the axis may also be oriented differently with respect to an upright orientation of the container (body). In this case, the dispenser unit may have an operation orientation which differs from a common stand up (i.e. upright) or inverted (i.e. upside down) orientation, like a (defined) tilted orientation of the dispenser unit.

The advantages of the valve device and the dispenser arrangement can thus be likewise applied to the dispenser unit. Hence, a container can be easily equipped with a corresponding dispenser arrangement and thus a valve device according to the present invention.

In a preferred embodiment, the container can be made of a plastic material, preferably polypropylene. Particularly, the container and the valve device (including the valve body and the valve elements) can be made of materials being recyclable in the same recycling stream, preferably they are made of the same material. Moreover, the container and the pump device can also be made of materials being recyclable in the same recycling stream, preferably they are made of the same material.

In a most preferred embodiment, all elements of the dispenser unit or the dispenser arrangement or the valve device can be made of materials being recyclable in the same recycling stream, preferably they are made of the same material (e.g. polypropylene (PP)) , which allows for an easy and economic recycling of the dispenser unit.

The opening may have an inner diameter in the range of 5-100 mm, preferably 10-50 mm, more preferred 20-30 mm and most preferred of 24 or 25 mm.

According to a fourth aspect of the invention, a method for delivering /dispensing a liquid is provided. The method comprises: providing a dispenser unit according to the present invention, as exemplarily described herein above. The pump device can be manipulated so as to apply a suction force to the flow path(s) at the outlet to deliver a liquid carried in the volume of the container (body) through the lower one of the two inlets, according to the operation orientation of the dispenser unit, through the respective flow path and out of the outlet to the dispenser of the pump device for dispensing the liquid. Hence, irrespective of the orientation of the dispenser unit or valve device being upright or inverted, an effective delivery and discharge of a corresponding liquid from a container can be obtained.

### 4. Description of preferred embodiments

In the following, the invention is described exemplarily with reference to the enclosed figures, in which
Fig. 1 is a perspective view of a valve device according to a first embodiment of the present invention,
Fig. 2 is a perspective exploded view of the valve device according to Fig. 1,
Fig. 3 is a cross-sectional side view of the valve device according to Fig. 1 with the axis in an upright orientation,
Fig. 4 is a cross-sectional side view of the valve device according to Fig. 3 with the axis in an inverted orientation compared to Fig. 3,
Fig. 5 is a perspective view of the valve device according to a second embodiment of the present invention,
Fig. 6 is a perspective exploded view of the valve device according to Fig. 5,
Fig. 7 is a cross-sectional side view of the valve device according to Fig. 5 with the axis in an upright orientation,
Fig. 8 is a cross-sectional side view of the valve device according to Fig. 7 with the axis in an inverted orientation compared to Fig. 7,
Fig. 9 is a perspective cross-sectional side view of a dispenser unit according to an embodiment of the present invention with a dispenser arrangement according to an embodiment of the present invention and being equipped with a valve device according to Fig. 5.

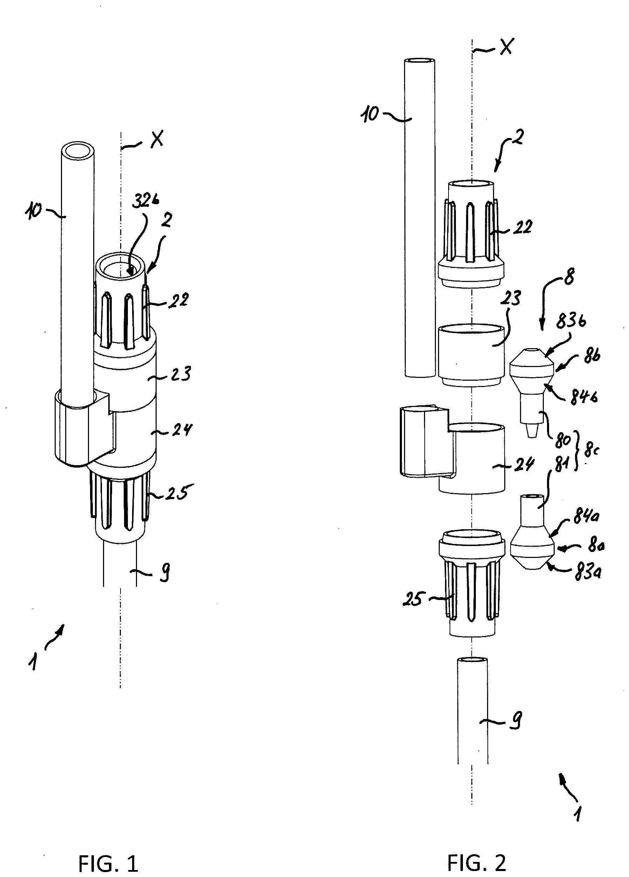

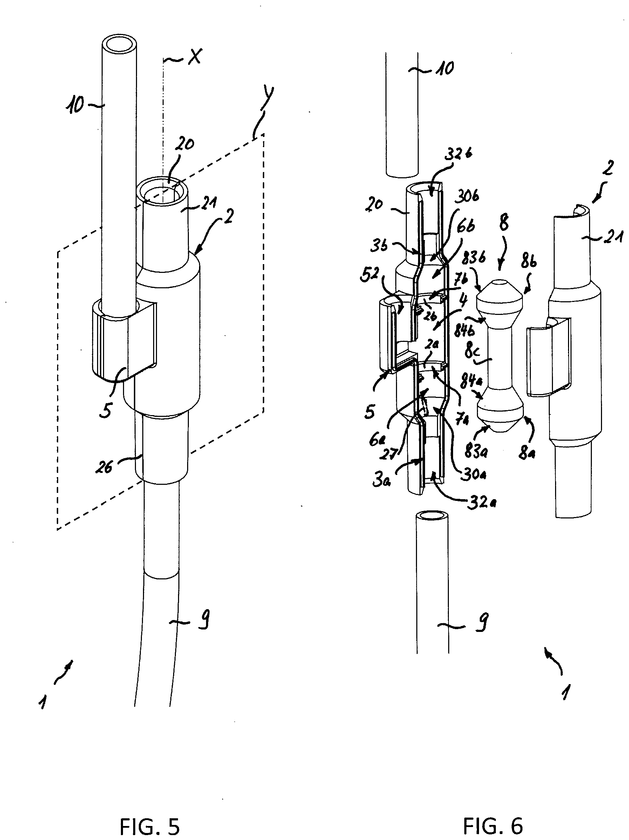

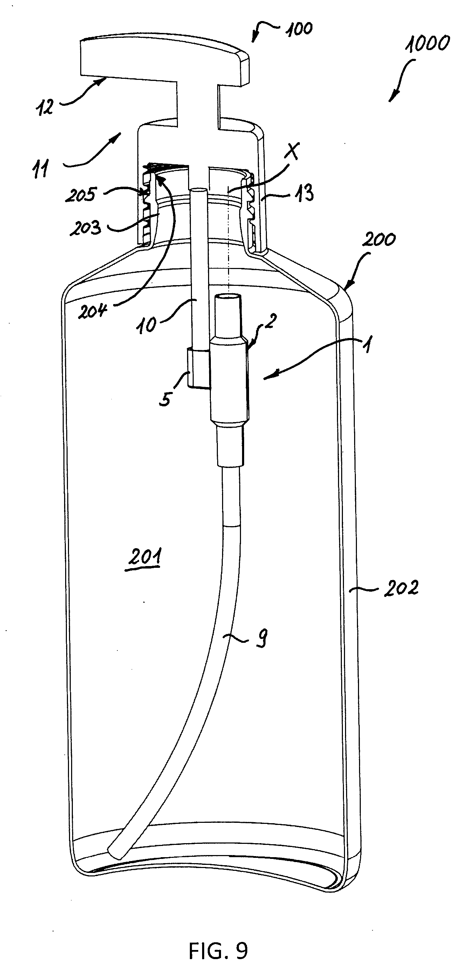

With reference to Figs. 1-4, an exemplary first embodiment of a valve device according to the invention is described. With reference to Figs. 5-8, an exemplary second embodiment of the valve device 1 according to the invention is described. With reference to Fig. 9, an exemplary embodiment of a dispenser unit 1000 including an exemplary embodiment of a corresponding dispenser arrangement 100 according to the invention are described. In some figures, reference signs have been omitted for simplicity reasons.

The valve device 1 according to the invention, as exemplarily shown in all figures, is a valve device 1 for a dispenser arrangement 100 to be used in a dispenser unit 1000, as exemplarily shown in Fig. 9.

The valve device 1 comprises a valve body 2, as illustrated in all figures. The valve body 2 can be made of a plastic material, preferably polypropylene (PP) or the like.

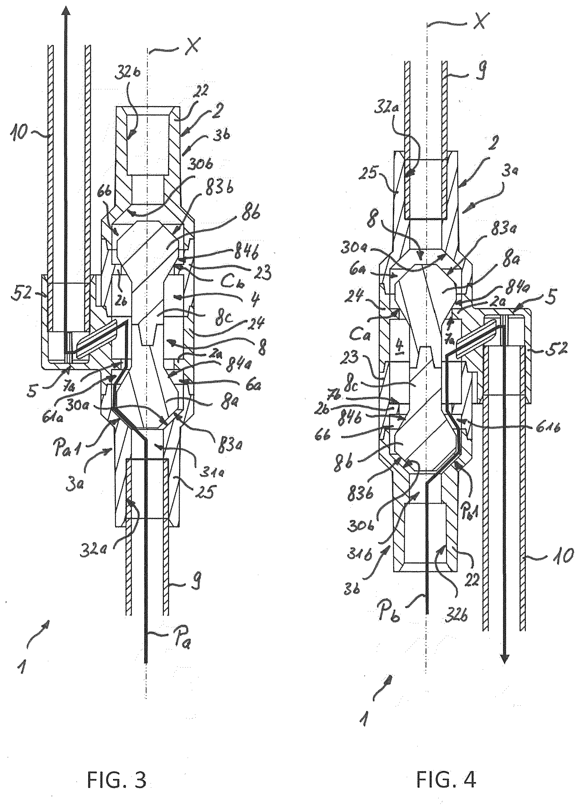

The valve body 2 comprises a first inlet 3a and a second inlet 3b, as can be best seen in Figs. 3, 4, 7 and 8.

At least one of the first inlet 3a and the second inlet 3b may comprise a tube connection section 32a, 32b, respectively, for connecting a suction tube 9, like a dip tube. As can be best seen in Figs. 3, 4, 7 and 8, preferably both of the first inlet 3a and the second inlet 3b each comprises such a tube connection section 32a, 32b.

The valve device 1 may further comprise the mentioned suction tube 9 (here in the form of a dip tube) connected to the respective tube connection section 32a, 32b so as to protrude from the valve body 2. In the shown embodiments, only one of the inlets (here the first inlet 3a) is connected via its connection section 32a to the said suction tube 9. In Fig. 9 it can be seen that this suction tube 9 preferably is used as a dip tube.

The valve body 2 further defines a valve space 4, which is arranged, along a longitudinal axis X, between the first inlet 3a and the second inlet 3b, as can be best seen in Figs. 3, 4, 7 and 8.

The valve body 2 further defines an outlet 5 being fluidly connected to the valve space 4 to allow a fluid to flow through the valve body 2 along a respective flow path Pa, Pb from either of the inlets 3a, 3b through the valve space 4 and out of the outlet 5.

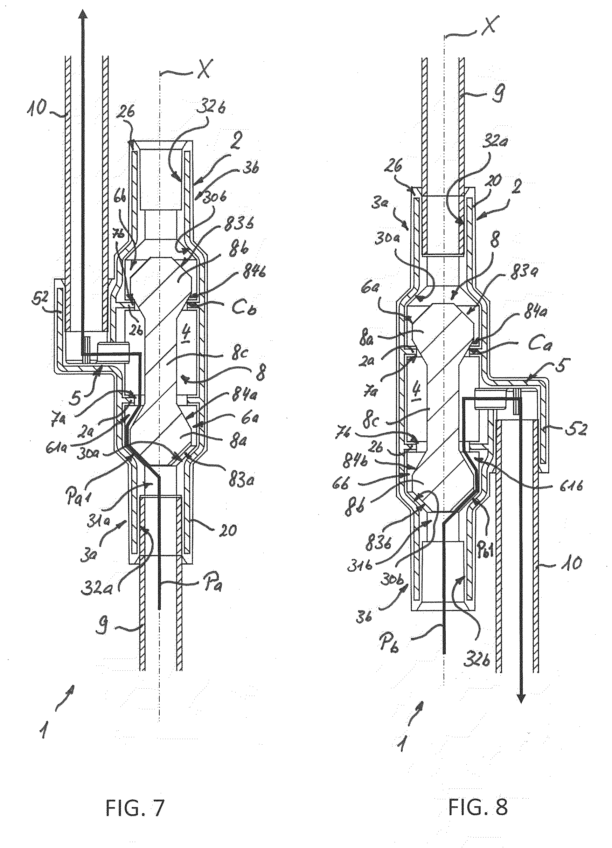

The outlet 5 may comprise a pump connection section 52 for connecting a pump device 11, preferably - as illustrated - through a delivery tube 10, so as to fluidly connect the outlet 5 with the so connected pump device 11, as exemplarily illustrated in Fig. 9 in combination with Fig. 7.

The valve device 1 may further comprise the said delivery tube 10 being connected to the pump connection section 52 so as to protrude from the valve body 2; here preferably in a direction parallel to the axis X, thus resulting in an overall compact layout of the valve device at least with respect to a radial direction with respect to the axis X.

The valve body 2 can be made of a plurality of body parts 20, 21, 22, 23, 24, 25 connected to define at least part of the respective flow paths Pa, Pb, as can be best seen in Figs. 2 and 6.

With reference to Fig. 5 in combination with Fig. 6, at least two of the body parts 20, 21 can be connected along a connection area 26 extending in a plane Y being oriented parallel to the axis X to define at least part of the flow paths Pa, Pb, and here the complete flow paths Pa, Pb, respectively.

With reference to Fig. 1 in combination with Fig. 2, at least two of the body parts 22, 23, 24, 25 (here all of the body parts) can be or comprise pipe segments arranged consecutively along the axis X and connected to define at least part of the flow paths Pa, Pb, here the complete flow paths Pa, Pb, respectively.

Each of the inlets - namely each of the first inlet 3a and the second inlet 3b - is fluidly connected, along the respective flow path Pa, Pb, to the valve space 4 via a respective inlet space 6a, 6b defined by the valve body 2 and arranged along the axis X, as illustrated in any of Figs. 3, 4, 7 and 8.

Each of the inlet spaces 6a, 6b is fluidly connected, along the respective flow path Pa, Pb, to the valve space 4 by a channel section 7a, 7b defined by the valve body 2 and arranged along the axis X, as also illustrated in any of Figs. 3, 4, 7 and 8.

Each of the channel sections 7a, 7b can be defined by a valve section 2a, 2b of the valve body 2 preferably having a reduced cross-section or diameter compared to a cross-section or diameter of the related inlet space 6a, 6b, when seen along the axis X, as can be derived from any of Figs. 3, 4, 7 and 8.

The valve device 1 may further comprise, per flow path Pa, Pb, a valve element 8a, 8b being at least partially housed in the respective inlet space 6a, 6b.

The valve elements 8a, 8b can be made of a plastic material, preferably polypropylene (PP). The valve body 2 and the valve elements 8a, 8b can be made of materials being recyclable in the same recycling stream. Preferably, the valve body 2 and the valve elements 8a, 8b are made of the same material, e.g. polypropylene (PP).

Each of the valve elements 8a, 8b is arranged so as to be, with respect to the axis X, axially displaceable in the related inlet space 6a, 6b between:
(a) a flow position (see the respective lower one of the valve elements 8a, 8b in Figs. 3, 4, 7 and 8), in which the respective valve element 8a, 8b is axially displaced towards the related inlet 3a, 3b to define a flow passage Pa1, Pb1 of the respective flow path Pa, Pb between the respective valve element 8a, 8b and a passage section 30a, 30b of the related inlet 3a, 3b, and
(b) a closing position (see the upper one of the valve elements 8a, 8b in each of Figs. 3, 4, 7 and 8), in which the respective valve element 8a, 8b is axially displaced towards the valve space 4 to close the related channel section 7a, 7b and thus to block the related flow path Pa, Pb (here the respective upper flow path).

Each of the valve elements 8a, 8b is configured such that, with the axis X being oriented substantially vertically (or even with the axis X being oriented at any possible angle, preferably at least with the axis X being oriented other than horizontally), and at least upon fluid flow through the valve device 1, the one of the valve elements 8a, 8b which is arranged lower compared to the other one of the valve elements 8b, 8a is positioned in the flow position to allow fluid flow along the related flow path Pa, Pb, and the other one of the valve elements 8b, 8a is positioned in the closing position to block fluid flow along the related other flow path Pb, Pa. As can be seen in Fig. 3 and 7, in the upright orientation (of the axis X), the valve element 8a of the related first inlet 3a is here in the flow position, while the other valve element 8b of the related second inlet 3b is in the closing position. In the inverted orientation (of the axis X) according to Figs. 4 and 8, the valve element 8b of the related second inlet 3b is here in the flow position, while the other valve element 8a of the related first inlet 3a is here in the closing position. This is mainly achieved by the consecutive arrangement of the inlets 3a, 3b, the inlet spaces 6a, 6b, the channel sections 7a, 7b and the valve space 4 along the axis X, with the first inlet 2a and the related inlet space 6a and channel section 7a being arranged opposite, with respect to the valve space 4, to the corresponding second inlet 3b and related inlet space 6b and channel section 7b. Hence, by inverting the system, the corresponding arrangement will preferably be mirrored, and thus the functionality be simply inverted, resulting in effectively obtaining and keeping the respective flow and closing positions irrespective of the orientation of the valve device 1; e.g. be oriented upright or upside down.

The related displacement functionality of the valve elements 8a, 8b can be further ensured by the two valve elements 8a, 8b being part of a monolithic valve part 8, as exemplarily shown in each of Figs. 3, 4, 7 and 8. By this monolithic valve part 8, an axial movement of the valve part 8 results in a mutual movement of the valve elements 8a, 8b along the axis X in that, if the one valve element 8a, 8b is in the flow position, the other valve element 8b, 8a is in the closing position, and the other way around, as can be clearly derived from a combination of Figs. 3 and 4 and a combination of Figs. 7 and 8, respectively.

The valve part 8 may comprise a rod section 8c which integrally connects the two valve elements 8a, 8b, as also illustrated in Figs. 3, 4, 7 and 8. The rod section 8c may extend between the valve elements 8a, 8b, preferably along the axis X. The rod section 8c may extend through the valve space 4.

As can be best derived from Fig. 6, the valve part 8 may have the shape of a dumbbell, preferably with the rod section 8c at a centre, and at either axial side of the rod section 8c having one of the valve elements 8a, 8b, here preferably as a widened section, with reference to a direction orthogonal to the axis X, compared to the rod section 8c, respectively.

As can be seen in Fig. 2, the valve part 8 may be produced as two separate elements 80, 81 to facilitate deforming from a moulding tool the respective elements 80, 81 after a corresponding production process (e.g. injection moulding). The two elements 80, 81 of the valve part 8 can then be fixedly connected, e.g. by gluing or ultrasonic welding or the like, to form the monolithic valve part 8.

At least one or each of the valve elements 8a, 8b may have a rotationally symmetric shape with respect to the axis X. At least one or each of the valve elements 8a, 8b may at least partially have a cylindrical shape, preferably a circular cylindrical shape, extending along the axis X. In the shown embodiments, a central section of the respective valve elements 8a, 8b here has such a circular cylindrical shape.

At least one or each of the valve elements 8a, 8b may have a flow path section 83a, 83b facing towards the related inlet 3a, 3b and tapering towards the related inlet 3a, 3b, as exemplarily illustrated in each of Figs. 3, 4, 7 and 8. Here, the respective flow path section 83a, 83b preferably has a conical shape.

Preferably, each of the passage sections 30a, 30b may have a shape which corresponds to the shape of the related flow path section 83a, 83b to define, in the flow position, the respective flow passage Pa1, Pb1 therebetween, as illustrated with respect to the corresponding lower one of the valve elements 8a, 8b or inlets 3a, 3b in any one of Figs. 3, 4, 7 and 8.

The valve device 1 may further comprise, per inlet 3a, 3b, a spacer section 27 to restrict the axial displacement of the related valve element 8a, 8b towards the related inlet 3a, 3b in the respective flow position. For illustration purposes, an example of such a spacer section 27 is illustrated by a dotted line in Fig. 6 The spacer section 27 may comprise a protrusion section of the valve body 2 (as illustrated in Fig. 6) and/or of the related valve element 8a, 8b arranged such that it extends across the respective flow passage Pa1, Pb1 in the flow position to support the related valve element 8a, 8b against the valve body 2. The spacer section 27 in Fig. 6 is here exemplarily shown as a rib or ridge formed as an intregral part of the valve body 2. The valve device 1 may comprise a plurality of spacer sections 27 being (preferably evenly) distributed about the axis X.

As illustrated in any one of Figs. 3, 4, 7 and 8, a flow cross-section of each of the flow passages Pa1, Pb1, e.g. (measured) in a plane perpendicular to a flowing direction along the respective flow path Pa, Pb at the related flow passage Pa1, Pb1 and/or to the axis X, can be less than
(a) a flow cross section of an inlet section 31a, 31b of the related inlet 3a, 3b upstream of the related flow passage Pa1, Pb1, e.g. (measured) in a plane perpendicular to a flowing direction along the respective flow path Pa, Pb at the related inlet section 31a, 31b and/or to the axis X, and/or
(b) a flow cross section of an outlet section 61a, 61b of the related inlet space 6a, 6b downstream of the related flow passage Pa1, Pb1 (i.e. between the flow passage Pa1, Pb1 and the related channel section 7a, 7b), e.g. (measured) in a plane perpendicular to a flowing direction along the respective flow path Pa, Pb at the related outlet section 61a, 61b and/or to the axis X.

Each of the valve element 8a, 8b and the related valve section 2a, 2b may together define, in the respective closing position, a circumferential contact area Ca, Cb to (e.g. securely / sealingly) close the related flow path Pa, Pb.

At least one or each of the valve elements 8a, 8b may have a blocking section 84a, 84b facing towards the valve space 4 and tapering towards the valve space 4. The respective blocking section 84a, 84b may preferably have a conical shape. As can be best seen in Figs. 3, 4, 7 and 8, the corresponding circumferential contact area Ca, Cb is here defined by a corresponding circumferential section of the blocking section 84a, 84b and the related valve section 2a, 2b.

With reference to Fig. 9, a dispenser arrangement 100 for delivering a liquid according to the present invention is exemplarily described.

The dispenser arrangement 100 comprises a valve device 1 according to the present invention. In the shown embodiment, the valve device 1 is a valve device 1 according to the embodiment of Figs. 5-8. However, any other embodiment of a valve device 1 according to the invention can also be applied.

The dispenser arrangement 100 further comprises a pump device 11 as schematically shown in Fig. 9. The pump device 11 is fluidly connected to the outlet 5, here preferably to the pump connection section 52, more preferred through the delivery tube 10, as can be derived from the combination of Fig. 9 and 7.

The pump device 11 is configured to be manipulated (preferably manually) so as to apply a suction force at the outlet 5 to deliver a liquid through the valve device to a dispenser 12 of the pump device 11 for dispensing the liquid.

The pump device 11 may comprise a connection section 13 for connecting the dispenser arrangement 100 to a container 200 carrying a liquid to be delivered by the dispenser arrangement 100.

A dispenser unit 1000 according to the invention is now exemplarily described with reference to Fig. 9.

The dispenser unit 1000 comprises a dispenser arrangement 100 according to the present invention. Here, for example, a dispenser arrangement 100 is shown having the valve device 1 according to the embodiment of Figs. 5-8. However, any other embodiment of a corresponding valve device 1 according to the invention can be applied.

The dispenser unit 1000 further comprises a container 200, as also illustrated in Fig. 9.

The container 200 comprises a container body 202 defining a volume 201 for carrying a/the liquid to be delivered/dispensed. The volume 201 can be any volume, as desired, e.g. ranging from a few millilitres to many litres and beyond.

The container 200 further comprises an opening 204 here being part of or defined by a neck 205 of the container body 202. The opening 204 allows for an insertion of at least part of the valve device 1 so as to allow delivery of the liquid from the container body 202 to the dispenser 12 by/upon manipulation of the pump device 11. To allow for an effective dispensing or discharge of the liquid by the dispenser arrangement 100 out of the container 200, the valve device 1 here preferably comprises the mentioned suction tube 9 in the form of a dip tube reaching to the ground of the container body 202 or volume 201.

As shown in Fig. 9, the container 200 may preferably comprise an attachment section 203 here exemplarily provided as a screw structure on the neck 205. The attachment section 203 is configured to allow for attachment of the dispenser arrangement 100 to the container body 202 preferably by connecting the connection section 13 (e.g. by way of a screw connection) to the attachment section 203. Preferably, the dispenser arrangement 100 is attached to the container body 202 such that the opening 204 is closed; e.g. by the connection section 13 here preferably being designed in the form of a cap closure.

The axis X may be oriented substantially vertically when the dispenser arrangement 100 is attached to the container 200 or container body 202, preferably to the attachment section 203. It is also possible that, in the upright position of the container 200 or container body 202, the dispenser arrangement 100 can be / is attached thereto so that the axis X is oriented differently than vertically. In this regard, the dispenser unit 1000 may be used in an operation orientation different from the stand up or upright orientation of the container 200 or container body 202 or dispenser unit 1000, in which the axis X is then preferably oriented substantially vertically (or even at any other possible orientation, preferably other than horizontally).

A method for delivering a liquid according to the invention is described. Firstly, a dispenser unit 1000 according to the invention is provided. Secondly, the pump device 11 is manipulated so as to apply a suction force to the outlet 5 - or to the flow paths Pa, Pb at the outlet 5 - to deliver a liquid carried in the volume 201 of the container body 202 through the lower one of the two inlets 3a, 3b, according to the operation orientation of the dispenser unit 1000 or valve device 1, through the respective (lower) flow path Pa, Pb, and out of the outlet 5 to the dispenser 12 of the pump device 11 for dispensing the liquid.

The invention is not limited to the embodiments as described herein above, as long as being covered by the appended claims.

## Claims

1. A valve device (1) for a dispenser arrangement (100), comprising:
• a valve body (2) defining
∘ a first inlet (3a),
∘ a second inlet (3b),
∘ a valve space (4) arranged, along a longitudinal axis (X), between the first inlet (3a) and the second inlet (3b),
∘ an outlet (5) being fluidly connected to the valve space (4) to allow a fluid to flow through the valve body (2) along a respective flow path (Pa, Pb) from either of the inlets (3a, 3b) through the valve space (4) and out of the outlet (5),
wherein each of the first inlet (3a) and the second inlet (3b) is fluidly connected, along the respective flow path (Pa, Pb), to the valve space (4) via a respective inlet space (6a, 6b) defined by the valve body (2) and arranged along the axis (X), and
wherein each of the inlet spaces (6a, 6b) is fluidly connected, along the respective flow path (Pa, Pb), to the valve space (4) by a channel section (7a, 7b) defined by the valve body (2) and arranged along the axis (X), and
• per flow path (Pa, Pb), a valve element (8a, 8b) being at least partially housed in the respective inlet space (6a, 6b),
wherein each of the valve elements (8a, 8b) is arranged so as to be, with respect to the axis (X), axially displaceable in the related inlet space (6a, 6b) between
∘ a flow position, in which the respective valve element (8a, 8b) is axially displaced towards the related inlet (3a, 3b) to define a flow passage (Pa1, Pb1) of the respective flow path (Pa, Pb) between the respective valve element (8a, 8b) and a passage section (30a, 30b) of the related inlet (3a, 3b), and
∘ a closing position, in which the respective valve element (8a, 8b) is axially displaced towards the valve space (4) to close the related channel section (7a, 7b) and thus to block the related flow path (Pa, Pb),
wherein each of the valve elements (8a, 8b) is configured such that, at least in an orientation of the valve device (1) with the axis (X) being oriented substantially vertically, at least upon fluid flow through the valve device (1), the one of the valve elements (8a, 8b) which is arranged lower compared to the other one of the valve elements (8b, 8a) is positioned in the flow position to allow fluid flow along the related flow path (Pa, Pb), and the other one of the valve elements (8b, 8a) is positioned in the closing position to block fluid flow along the related other flow path (Pb, Pa).

2. The valve device (1) according to the preceding claim, wherein each of the channel sections (7a, 7b) is defined by a valve section (2a, 2b) of the valve body (2) preferably having a reduced cross-section or diameter compared to a cross-section or diameter of the related inlet space (6a, 6b) when seen along the axis (X),
wherein preferably each of the valve elements (8a, 8b) and the related valve sections (2a, 2b) together define, in the respective closing position, a circumferential contact area (Ca, Cb) to close the related flow path (Pa, Pb).

3. The valve device (1) according to any one of the preceding claims, wherein the two valve elements (8a, 8b) are part of a monolithic valve part (8) such that an axial movement of the valve part (8) results in a mutual movement of the valve elements (8a, 8b) along the axis (X) in that, if the one valve element (8a, 8b) is in the flow position, the other valve element (8b, 8a) is in the closing position, and the other way around,
wherein preferably the valve part (8) comprises a rod section (8c) integrally connecting the two valve elements (8a, 8b).
wherein the rod section (8c) preferably extends between the valve elements (8a, 8b), more preferred along the axis (X),
wherein the rod section (8c) preferably extends through the valve space (4),
wherein preferably the valve part (8) has the shape of a dumbbell, more preferred with the rod section (8c) at a center, and at either axial side of the rod section (8c) having one of the valve elements (8a, 8b) as a widened section, orthogonal to the axis (X), compared to the rod section (8c), respectively.

4. The valve device (1) according to any one of the preceding claims,
wherein at least one or each of the valve elements (8a, 8b) has a rotationally symmetric shape with respect to the axis (X),
and/or
wherein at least one or each of the valve elements (8a, 8b) at least partially has a cylindrical shape, preferably a circular cylindrical shape, extending along the axis (X).

5. The valve device (1) according to any one of the preceding claims,
wherein at least one or each of the valve elements (8a, 8b) has a flow path section (83a, 83b) facing towards the related inlet (3a, 3b) and tapering towards the related inlet (3a, 3b),
wherein preferably the respective flow path section (83a, 83b) has a conical shape,
wherein preferably each of the passage sections (30a, 30b) has a shape which corresponds to the shape of the related flow path section (83a, 83b) to define, in the flow position, the respective flow passage (Pa1, Pb1) there between,
and/or
wherein at least one or each of the valve elements (8a, 8b) has a blocking section (84a, 84b) facing towards the valve space (4) and tapering towards the valve space (4), wherein the respective blocking section (84a, 84b) preferably has a conical shape.

6. The valve device (1) according to any one of the preceding claims, further comprising, per inlet (3a, 3b), a spacer section (27) to restrict the axial displacement of the related valve element (8a, 8b) towards the related inlet (3a, 3b) in the respective flow position,
wherein preferably the spacer section (27) comprises a protrusion section of the valve body (2) and/or of the related valve element (8a, 8b) arranged such that it extends across the respective flow passage (Pa1, Pb1) in the flow position to support the related valve element (8a, 8b) against the valve body (2).

7. The valve device (1) according to any one of the preceding claims, wherein a flow cross-section of each of the flow passages (Pa1, Pb1) is less than a flow cross-section of an outlet section (61a, 61b) of the related inlet space (6a, 6b) downstream of the related flow passage (Pa1, Pb1).

8. The valve device (1) according to any one of the preceding claims, wherein at least one of the first inlet (3a) and the second inlet (3b) comprises a tube connection section (32a, 32b), respectively, for connecting a suction tube (9), preferably a dip tube,
wherein preferably the valve device (1) further comprises the suction tube (9) connected to the tube connection section (32a, 32b) so as to protrude from the valve body (2).

9. The valve device (1) according to any one of the preceding claims, wherein the outlet (5) comprises a pump connection section (52) for connecting a pump device (11), preferably through a delivery tube (10), so as to fluidly connect the outlet (5) with the pump device (11),
wherein preferably the valve device (1) further comprises the delivery tube (10) connected to the pump connection section (52) so as to protrude from the valve body (2).

10. The valve device (1) according to any one of the preceding claims, wherein the valve body (2) is made of a plurality of body parts (20, 21; 22, 23, 24, 25) connected to define at least part of the respective flow paths (Pa, Pb),
wherein preferably at least two of the body parts (20, 21) are connected along a connection area (26) extending in a plane (Y) being oriented parallel to the axis (X) to define at least part of the flow paths (Pa, Pb),
wherein preferably at least two of the body parts (22, 23, 24, 25) are or comprise pipe segments arranged consecutively along the axis (X) and connected to define at least part of the flow paths (Pa, Pb).

11. The valve device (1) according to any one of the preceding claims,
wherein the valve body (2) and/or the valve elements (8a, 8b) is/are made of a plastic material, preferably polypropylene,
and/or
wherein the valve body (2) and the valve elements (8a, 8b) are made of materials being recyclable in the same recycling stream, preferably they are made of the same material.

12. A dispenser arrangement (100) for delivering a liquid, comprising:
• a valve device (1) according to any one of the preceding claims, and
• a pump device (11) being fluidly connected to the outlet (5), preferably to the pump connection section (52), more preferred through the delivery tube (10),
wherein the pump device (11) is configured to be manipulated so as to apply a suction force at the outlet (5) to deliver a liquid through the valve device to a dispenser (12) of the pump device (11) for dispensing the liquid.

13. The dispenser arrangement (100) according to the preceding claim, wherein the pump device (11) comprises a connection section (13) for connecting the dispenser arrangement (100) to a container (200) carrying a liquid to be delivered by the dispenser arrangement (100).

14. A dispenser unit (1000), comprising,
• the dispenser arrangement (100) according to claim 12 or 13, and
• a container (200), comprising:
∘ a container body (202) defining a volume (201) for carrying a liquid to be delivered,
∘ an opening (204) for inserting at least part of the valve device (1) so as to allow delivery of the liquid from the container body (202) to the dispenser (12) by manipulation of the pump device (11), and
∘ optionally an attachment section (203) for attaching the dispenser arrangement (100) to the container body (202) preferably in a way to close the opening (204),
wherein the axis (X) preferably is oriented substantially vertically when the dispenser arrangement (100) is attached to the container (200), preferably to the attachment section (203).

15. A method for delivering a liquid, comprising:
• providing a dispenser unit (1000) according to the preceding claim, and
• manipulating the pump device (11) so as to apply a suction force to the flow paths (Pa, Pb) at the outlet (5) to deliver a liquid carried in the volume (201) of the container body (202) through the lower one of the two inlets (3a, 3b), according to the operation orientation of the dispenser unit (1000), through the respective flow path (Pa, Pb) and out of the outlet (5) to the dispenser (12) of the pump device (11) for dispensing the liquid.
